# EUROPÄISCHE PATENTSCHRIFT

(11) **EP 2 993 982 B1**
(45) Veröffentlichungstag und Bekanntmachung des Hinweises auf die Patenterteilung: **17.07.2019**
(21) Anmeldenummer: 14721884.6
(22) Anmeldetag: 07.05.2014
(51) Int. Cl.: A01N 47/30, A01N 25/28, A01P 13/00

(54) **MIKROKAPSELN ENTHALTEND EIN ALGIZID UND EIN MELAMIN-FORMALDEHYD-POLYMER**
MICROCAPSULES CONTAINING AN ALGICIDE AND A MELAMINE-FORMALDEHYDE POLYMER
MICROCAPSULES CONTENANT UN AGENT ALGICIDE ET UN POLYMÈRE MÉLAMINE-FORMALDÉHYDE

(30) Priorität: 08.05.2013 EP 13167028
(43) Veröffentlichungstag der Anmeldung: 16.03.2016
(73) Patentinhaber: Lanxess Deutschland GmbH, 50569 Köln (DE)
(72) Erfinder: UHR, Hermann, 51373 Leverkusen (DE); MÖWS, Katrin, 44137 Dortmund (DE)
(86) Internationale Anmeldenummer: PCT/EP2014/059316
(87) Internationale Veröffentlichungsnummer: WO 2014/180890

(56) Entgegenhaltungen:
- WO-A1-96/03041
- WO-A1-2004/000953
- DE-A1-102006 061 890
- Frank Sauer: "Sustainable Protection of Building Facades", Color and Paint Technology Association Annual Meeting 2012 , 6. November 2012 (2012-11-06), XP002711220, Malmö, Sweden Gefunden im Internet: URL:http://sv.slf.cc/dokument/Frank%20Saue r,%20LANXESS%20Film%20preservation%20for%2 0facades,%20Diuron%20and%20incapsulation.p df [gefunden am 2013-08-13]

## Beschreibung

Die vorliegende Erfindung betrifft ein Verfahren zur Herstellung von Mikrokapseln enthaltend ein oder mehrere Biozide wie insbesondere Algizide sowie zumindest ein Melamin-Formaldehyd-Polymer, ein Verfahren zur Herstellung, die so hergestellten Mikrokapselnsowie ihre Verwendung zum Schutz von technischen Materialien.

Einige Harnstoffderivate wie beispielsweise Diuron (3-(3,4-Dichlorphenyl)-1,1-dimethylharnstoff) sind für ihre algentoxische Wirkung bekannt und werden als Algizid in Beschichtungsmassen wie beispielsweise in Außenfarben benutzt, um Algenbefall an Außenwänden zu verhindern. In der Beschichtungsmassenindustrie werden hohe Ansprüche an die zur Ausrüstung von Beschichtungsmassen verwendeten Algizide gestellt. Die Beschichtungsmassen müssen beispielsweise auch bei häufigem Wasserkontakt stabil bleiben und keiner Verfärbung unterliegen. Da manche Algizide wie beispielsweise Diuron wasserlöslich sind, wird durch Kontakt der Außenfarbe, beispielsweise mit Schlagregen, das Algizid aus den Farben herausgewaschen (auch "Leaching" genannt). Dadurch kommt es zu einer unerwünschten Verringerung der algentoxischen Wirkung sowie zu einer starken lokalen Belastung der Umwelt mit Algiziden. Dieses Leaching sollte gering sein damit die Außenfarbe und die Außenwände lange vor Algenbefall geschützt sind. Eine Möglichkeit zur Verringerung des Leachings ist die Verwendung von Mikroverkapselungen.

Aus dem Stand der Technik sind vor mikrobiologischem Befall geschützte Beschichtungsmassen sowie Verfahren zur Herstellung von mikroverkapselten Biozide bekannt.

So wird beispielsweise in WO04000953A1 eine Beschichtungsmasse zum Schutz gegen Mikroorganismenbefall von Oberflächen, die der Einwirkung von Feuchtigkeit oder Wasser ausgesetzt sind, beschrieben, wobei die Beschichtungsmasse entweder selbst einen pH-Wert von mindestens 11,0 aufweist oder für das Beschichten eines Untergrundmaterials vorgesehen ist, dessen pH-Wert mindestens 11,0 beträgt. Die Beschichtungsmasse ist dadurch gekennzeichnet, dass sie ein Biozid enthält, das in einem Trägermaterial aus Feststoffteilchen gebunden ist und daraus verzögert freigegeben wird.

DE102006061890A1 beschreibt Dichtungsmassen, die als Biozid beispielsweise 2-n-Octyl-4-isothiazolin-3-on sowie gegebenenfalls ein oder mehrere andere Biozide enthalten, wobei das Biozid in Mikropartikeln aus zum Beispiel einem Aminoplast-Harz eingeschlossen ist.

Aus DE10133545A1 ist es bekannt, Dichtungsmassen mit speziellen Benzothiophen-Fungizid-Zubereitungen zu behandeln, um ein Schimmeln der Polymermassen zu verhindern. Es wird dabei auch auf die Schwierigkeit hingewiesen, geeignete Fungizide für Dichtungsmassen zu finden, die stabil sind und keiner Auswaschung unterliegen. Deshalb müssen die eingesetzten Biozide in hohen Konzentrationen verwendet werden, was auch zu einer Umweltbelastung führen kann.

Aus JP2002053412A2 ist es bekannt, dass man Biozide in einer Harzmatrix einschließen kann. So wird der Einschluss von 2-n-Octyl-4-isothiazolin-3-on in einem Styrol-Maleinsäureanhydrid-Harz in diesem Dokument beschrieben.

EP0758633A1 beschreibt poröse Granulate, die chemische Stoffe, wie zum Beispiel auch Biozide enthalten können, die diese in der Anwendung langsam freigeben.

In JP2004099557A2 sind feine Partikel von biozidhaltigen Harzen beschrieben, die zur Unterdrückung des Wachstums von Mikroorganismen insbesondere in wässrigen Emulsionsfarben eingesetzt werden.

WO 96/03041 A1 beschreibt die Mikroverkapslung von Chlortoluron mit einem Melamin-Formaldehyd-Polymer.

Mikroverkapselungen von Diuron analog zu Verfahren des Standes der Technik von mikroverkapselten Bioziden zeigen zwar eine Reduktion des Leachings. Einige weisen aber hohe Anteile an freiem Formaldehyd auf, die einen kommerziellen Einsatz deutlich erschweren.

Der Stand der Technik zeigt weiterhin, dass es nicht ohne weiteres möglich ist Mikrokapseln mit zufriedenstellender algentoxischer Wirkung bei geringer Leaching-Rate und hoher Lagerstabilität bereitzustellen.

Es bestand daher die Aufgabe der vorliegenden Erfindung Mikrokapseln bereitzustellen, die einen verbesserten Schutz von Beschichtungsmassen vor Algenbefall ermöglichen.

Die Lösung der Aufgabe und Gegenstand der vorliegenden Erfindung ist nun ein Verfahren zur Herstellung von Mikrokapseln, enthaltend
- zumindest eine Verbindung der Formel (I) 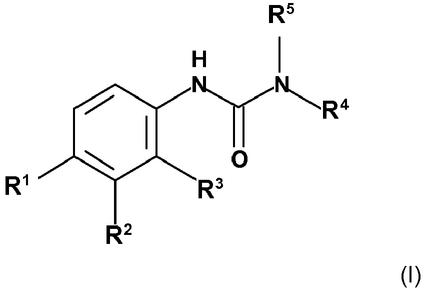 wobei
   R¹ und R² unabhängig voneinander Wasserstoff, Chlor, Brom, verzweigtes oder geradkettiges, acyclisches (C₁-C₁₀)-Alkyl, besonders bevorzugt (C₁-C₄)-Alkyl, verzweigtes oder geradkettiges, acyclisches (C₁-C₁₀)-Alkoxy, besonders bevorzugt (C₁-C₄)-Alkoxy Trifluormethyl oder Aryloxy,
   R³ Wasserstoff, Chlor, Brom, Fluor oder verzweigtes oder geradkettiges, acyclisches (C₁-C₁₀)-Alkyl, besonders bevorzugt (C₁-C₄)-Alkyl und
   R⁴ und R⁵ unabhängig voneinander verzweigtes oder geradkettiges, acyclisches (C₁-C₁₀)-Alkyl, besonders bevorzugt (C₁-C₄)-Alkyl oder verzweigtes oder geradkettiges, acyclisches (C₁-C₁₀)-Alkoxy, besonders bevorzugt (C₁-C₄)-Alkoxy bedeuten,
      wobei die Verbindung der Formel (I) mit zumindest einem Melamin-Formaldehyd Polymer mikroverkapselt ist, wobei die Verbindung der Formel (I) mit zumindest einem Melamin-Formaldehyd Polymer mikroverkapselt ist, wobei das Verfahren
      zumindest folgende Schritte umfasst:
         a) Abscheidung von Mikroverkapselungsmaterial enthaltend Melamin-Formaldehyd Polymer auf zumindest einer Verbindung der Formel (I) und danach
         b) Behandlung der Mikrokapseln bei einer Temperatur von 70 bis 95°C über einen Zeitraum von 3 bis 24 Stunden und
         c) nach der thermischen Behandlung der Mikrokapseln Harnstoff zugegeben wird.

Der Rahmen der Erfindung umfasst alle oben stehenden und im Folgenden aufgeführten, allgemeinen oder in Vorzugsbereichen genannten Parameter und Erläuterungen untereinander, also auch zwischen den jeweiligen Bereichen und Vorzugsbereichen in beliebiger Kombination.

Die erfindungsgemäßen Mikrokapseln enthalten zumindest eine Verbindung der Formel (I).

Bevorzugt steht (C₁-C₄)-Alkyl beispielsweise für Methyl, Ethyl, n-Propyl, iso-Propyl, n-Butyl, iso-Butyl, sek-Butyl oder tert-Butyl.

Bevorzugt steht (C₁-C₄)-Alkoxy beispielsweise für Methoxy, Ethoxy, n-Propoxy, iso-Propoxy, n-Butoxy, iso-Butoxy, sek-Butoxy oder tert-Butoxy.

Aryloxy bedeutet eine substituierte Aryloxygruppe, bevorzugt Phenoxy, oder eine unsubstituierte Aryloxygruppe, bevorzugt durch verzweigtes oder geradkettiges, acyclisches (C₁-C₁₀)-Alkoxy, besonders bevorzugt (C₁-C₄)-Alkoxy, insbesondere durch Methoxy substituiertes Phenoxy.

R¹ und R² stehen bevorzugt unabhängig voneinander für Wasserstoff, Chlor, Brom, Methyl, iso-Propyl, Methoxy, Trifluormethyl, Phenoxy oder para-Methoxyphenoxy.

R³ steht bevorzugt für Wasserstoff.

R⁴ und R⁵ stehen bevorzugt unabhängig voneinander für Methyl, Methoxy oder Butyl.

Beispiele für besonders bevorzugte Verbindungen der Formel (I) sind 3-(4-Brom-3-chlorphenyl)-1-methoxy-1-methylharnstoff (Chlorbromuron), 3-(3-Chlor-4-methylphenyl)-1,1-dimethylharnstoff (Chlortoluron), 3-(3,4-Dichlorphenyl)-1,1-dimethylharnstoff (Diuron), 3-(4-(4-Methoxyphenoxy)phenyl)-1,1-dimethylharnstoff (Difenoxuron), 1,1-Dimethyl-3-[3-(trifluormethyl)phenyl]harnstoff (Fluometuron), 3-(4-Isopropylphenyl)-1,1-dimethylharnstoff (Isoproturon) und 1-Butyl-3-(3,4-dichlorophenyl)-1-methylharnstoff (Neburon). Ganz besonders bevorzugt ist Diuron.

Die Verbindungen der Formel (I) selbst sind bekannt und können nach literaturbekannten Methoden hergestellt oder im Handel erworben werden.

Die Mikroverkapselung der Verbindungen der Formel (I) erfolgt durch Mikroverkapselungsmaterial. Mikroverkapselung bedeutet im Rahmen dieser Erfindung die zumindest teilweise, vorzugsweise vollständige, Umhüllung der erfindungsgemäßen Verbindungen der Formel (I) mit Mikroverkapselungsmaterial.

Die erfindungsgemäßen Mikrokapseln zeichnen sich dadurch aus, dass sie beispielsweise eine volumengemittelte Teilchengröße von 0,3 bis 100 µm aufweisen. Bevorzugt weisen die erfindungsgemäßen Mikrokapseln eine volumengemittelte Teilchengröße von 5 bis 40 µm auf. Darüber hinaus zeichnen sich die erfindungsgemäßen Mikrokapseln dadurch aus, dass der D90 Wert, bestimmt über Laserbeugung als volumengewichtete Verteilung wie im experimentellen Teil beschrieben, vorzugsweise kleiner als 40 µm ist.

Die erfindungsgemäßen Mikrokapseln enthalten zumindest ein Melamin-Formaldehyd Polymer als Mikroverkapselungsmaterial. Unter dem Begriff Melamin-Formaldehyd Polymer ist ein Polymer zu verstehen, bei dem Melamin, typischerweise mit Formaldehyd in molarem Überschuss, polykondensiert worden ist.

Generelle Verfahren zur Herstellung von Mikroverkapseln, insbesondere auch zur Herstellung von Mikroverkapseln aus Melamin-Formaldehyd Polykondensaten sind bekannt (siehe beispielsweise C.A. Finch, R. Bodmeier, Microencapsulation, Ullmann's Encyclopedia of Industrial Chemistry, 6. Auflage 2001, Electronic Release).

Das Mikroverkapselungsmaterial der erfindungsgemäßen Mikrokapseln kann beispielsweise auch andere synthetische, halbsynthetische oder natürliche Aminoplast-Harze enthalten. Unter Aminoplast-Harzen versteht man im Allgemeinen Polykondensationsprodukte aus Carbonyl-Verbindungen mit NH-Gruppen enthaltenden Verbindungen. Von besonderem Interesse sind in diesem Zusammenhang mit Harnstoff beziehungsweise Phenol modifizierte Melamin-Formaldehyd-Harze (Melamin-Harnstoff-Formaldehyd-Harze, Melamin-Phenol-Formaldehyd-Harze). Als weitere mögliche Aminoplast-Harze können dem Melamin-Formaldehyd Harz beispielsweise Aminoplast-Harze aus einer NH-Gruppen enthaltenden Verbindung und Acetaldehyd oder Glyoxal zugesetzt werden. Des Weiteren können Urethanharze, Cyanamidharze bzw. Dicyanamidharze, Anilinharze, Sulfonamidharze oder Mischungen dieser Harze zugesetzt sein. Diese Harze und deren Herstellung sind dem Fachmann bekannt.

In einer weiteren Ausführungsform sind bevorzugte synthetische Materialien für die Mikroverkapselungsmaterial beispielsweise Acrylpolymere und -copolymere, Polyacrylamid, Polyalkylcyanoacrylat, und Poly-(ethylenvinylacetat), Aluminiummonostearat, Carboxyvinyl-polymere, Polyamide, Poly-(methylvinylether-maleinsäureanhydrid), Poly-(adipyl-L-lysin), Polycarbonate, Polyterephthalamid, Poly-(vinylacetatphthalat), Poly-(terephthaloyl- L-lysin), Polyarylsulfone, Poly-(methylmethacrylat), Poly-(ε-caprolacton), Polyvinylpyrrolidon, Polydimethylsiloxan, Polyoxyethylene, Polyester, Polyglykolsäure, Polymilchsäure und deren Copolymere, Polyglutaminsäure, Polylysin, Polystyrol, Poly-(styrol-acrylnitril), Polyimide und Polyvinylalkohol.

In einer weiteren Ausführungsform sind bevorzugte halbsynthetische Materialien für die Mikroverkapselungsmaterial beispielsweise Celluloseacetat, Celluloseacetatbutyrat, Celluloseacetatphthalat, Cellulosenitrat, Ethylcellulose, Hydroxypropylcellulose, Natriumcarboxymethylcellulose, Hydroxypropylmethylcellulose, Methylcellulose, Hydroxypropylmethylcellulosephthalat, hydrierter Talg, Myristylalcohol, Glycerinmono- oder -dipalmitat, hydriertes Ricinusöl, Glycerylmono- oder -tristearate und 12-Hydroxystearylalkohol.

In einer weiteren Ausführungsform sind bevorzugte natürliche Materialien für die Mikroverkapselungsmaterial beispielsweise Gummi Arabicum, Agar, Agarose, Maltodextrin, Natriumalginat, Calciumalginat, Dextran, Fette, Fettsäuren, Cetylalkohol, Milchfeststoffe, Molassen, Gelatine, Gluten, Albumin, Schellack, Stärken, Caseinate, Stearine, Saccharose sowie Wachse, wie Bienenwachs, Carnaubawachs und Spermacetiwachs.

Im Allgemeinen können dem Melamin-Formaldehyd Polymer bis zu 50 Gew.-%, bezogen auf das Gesamtgewicht an Mikroverkapselungsmaterial, anderer synthetische, halbsynthetische oder natürliche Aminoplast-Harze zugesetzt werden. Bevorzugt enthält das Mikroverkapselungsmaterial aber mindestens 95 Gew.-% Melamin-Formaldehyd Polymer, besonders bevorzugt mindestens 99 Gew.-% Melamin-Formaldehyd Polymer.

Im Allgemeinen beträgt das Gewichtsverhältnis (w/w) des Mikroverkapselungsmaterials zu Verbindungen der Formel (I) in erfindungsgemäßen Mikrokapseln von 1:100 bis 100:1, bevorzugt von 1:10 bis 10:1 und ganz besonders bevorzugt von 1:4 bis 2:1.

Im dem erfindungsgemäßen Verfahren zur Herstellung der erfindungsgemäßen Mikrokapseln kann beispielsweise eine Lösung der zumindest einen Verbindung der Formel (I) beispielsweise in einem mit Wasser nicht mischbaren Lösungsmittel eingesetzt werden, die dann emulgiert wird. Bevorzugt wird bei der Herstellung der erfindungsgemäßen Mikrokapseln eine wässrige Suspension oder Emulsion des Verbindungen der Formel (I) eingesetzt.

Das Verfahren umfasst den Einsatz von Melamin-Formaldehyd Polymeren, die durch Änderung des pH-Wertes auf Verbindungen der Formel (I) niedergeschlagen und thermisch behandelt werden und so die Mikrokapsel bilden. Die Melamin-Formaldehyd Polymere sind kommerziell erhältlich, beispielsweise Saduren® (BASF AG), Maprenal® (Ineos Melamines), Quecodur® (Thor GmbH) oder lassen sich auch aus Melamin und Formaldehyd nach bekannten Methoden, wie beispielsweise in WO 2008/000797 A2 beschrieben, herstellen.

Dem Melamin-Formaldehyd Polymer können auch weitere dem Fachmann bekannte Hilfsstoffe, wie beispielsweise, Schutzkolloide beigefügt werden.

Als Schutzkolloide können in dem erfindungsgemäßen Verfahren wasserlösliche Polymere eingesetzt werden. Falls Schutzkolloide eingesetzt werden, werden bevorzugt Polyacrylate, bevorzugt Coadis® BR3 (Firma Coatex), teilverseiftes Polyvinylacetat, Polyvinylalkohol, Polyvinylpyrolidon, Zelluloseether (Tylose), wie beispielsweise Methylzellulose, Hydroxyethylzellulose oder Hydroxypropylmethylzellulose, Stärke, Proteine, Gummi Arabicum, Alginate, Pektine, Gelatine oder Mischungen aus diesen Verbindungen eingesetzt. Besonders bevorzugt wird als Schutzkolloid eine Mischung aus Gummi Arabicum und Polyacrylat eingesetzt.

Das im Wasser gelöste Melamin-Formaldehyd Polymer wird im Allgemeinen durch Einstellen eines sauren pH-Wertes ausgefällt und scheidet sich auf der Oberfläche der Verbindungen der Formel (I) ab.

Geeignete Bedingungen für die Abscheidung des Polymers auf den Verbindungen der Formel (I) können in wenigen Vorversuchen ohne großen Aufwand experimentell bestimmt werden. Beispielsweise kann die Abscheidung bei einem pH-Wert im Bereich von 0 bis 6,99, bevorzugt von 1,0 bis 4,0, besonders bevorzugt von 2,50 bis 3,50 und ganz besonders bevorzugt von 2,80 bis 3,20, gemessen bei Standardbedingungen von 20°C, stattfinden.

Zur Einstellung des pH Wertes können sowohl anorganische als auch organische Säuren wie beispielsweise Salzsäure, Schwefelsäure, Phosphorsäure oder Zitronensäure, Oxalsäure, Essigsäure, Ameisensäure, saure Salze oder Mischungen hieraus, verwendet werden.

Die Zugabe des Polymers zur Lösung der Verbindungen der Formel (I) kann beispielsweise unmittelbar oder über einen Zeitraum von mindestens einer Minute, bevorzugt über einen Zeitraum von mindestens 30 Minuten bis 24 Stunden, besonders bevorzugt über einen Zeitraum von mindestens einer Stunde und ganz besonders bevorzugt über einen Zeitraum von mindestens 2 bis 6 Stunden erfolgen.

Im erfindungsgemäßen Verfahren zur Herstellung der erfindungsgemäßen Mikrokapseln kann die Abscheidungstemperatur des Melamin-Formaldehyd Polymere in einem breiten Bereich variiert werden, bevorzugt findet die Abscheidung bei einer Temperatur von 40 bis 80°C, besonders bevorzugt in einem Bereich von 50 bis 70°C und ganz besonders bevorzugt bei einer Temperatur von 56 bis 64°C statt.

Im erfindungsgemäßen Verfahren zur Herstellung der erfindungsgemäßen Mikrokapseln erfolgt eine anschließende thermisch Behandlung. Ohne sich in irgendeiner Form wissenschaftlich festlegen zu wollen wird vermutet, dass durch die thermische Behandlung noch nicht vernetzte oder noch nicht polymerisierte Gruppen vernetzt oder polymerisiert werden. Nach der Abscheidung des Melamin-Formaldehyd Polymers kann bei Temperaturen die niedriger, gleich oder höher sind als die Abscheidungstemperatur eine Behandlung des abgeschiedenen Melamin-Formaldehyd Polymers erfolgen. Bevorzugt erfolgt die Behandlung unter Rühren. Die erfindungsgemäßen Mikrokapseln können in einer alternativen Ausführungsform auch chemisch behandelt werden.

Bevorzugt findet die Behandlung der erfindungsgemäßen Mikrokapseln bei gegenüber der Abscheidungstemperatur erhöhter Temperatur über einen Zeitraum von mehr als einer Stunde statt.

Weiterhin bevorzugt findet die Behandlung der erfindungsgemäßen Mikrokapseln bei Temperaturen von 50 bis 95°C über einen Zeitraum von mindestens einer Stunde, besonders bevorzugt, bei Temperaturen von 70 bis 95°C, über einen Zeitraum von mindestens einer Stunde, bevorzugt über einen Zeitraum von 1 bis 48 Stunden, bevorzugt 3 bis 24 Stunden, alternativ 1 bis 8 Stunden, oder 2 bis 6 Stunden und noch weiter bevorzugt bei Temperaturen von 80 bis 90°C über einen Zeitraum von mindestens einer Stunde, bevorzugt über einen Zeitraum von 1 bis 48 Stunden, bevorzugt 3 bis 24 Stunden, alternativ 1 bis 8 Stunden, oder 2 bis 6 Stunden statt.

Im erfindungsgemäßen Verfahren zur Herstellung der erfindungsgemäßen Mikrokapseln ist es möglich eine Suspension oder Emulsion der Verbindungen der Formel (I) und des Melamin-Formaldehyd Polymers mit gegebenenfalls Hilfsstoffen, wie beispielsweise Schutzkolloiden oder aber auch weiteren Aminoplast-Harzen, vorzulegen, auf die Abscheidungstemperatur aufzuheizen und den oben genannten pH Wert einzustellen, so dass das Harz ausfällt.

Die Harnstoffzugabe kann im Rahmen einer Formulierung mit weiteren Hilfsstoffen wie beispielsweise Gebindekonservierungsstoffen und Emulgatoren nach der thermischen Behandlung erfolgen. Bevorzugt erfolgt die Zugabe des Harnstoffs nach der thermischen Behandlung im Rahmen einer Formulierung mit weiteren Hilfsstoffen.

Die zugegebene Harnstoffmenge beträgt beispielsweise von 0,1 bis 20 Gew.-%, bevorzugt 1 bis 10 Gew.-%, besonders bevorzugt 2 bis 5 Gew.-% bezogen auf die Gesamtmenge an eingesetztem Verkapselungsmaterial.

In einer alternativen Ausführungsform ist es aber ebenfalls möglich, zunächst eine Suspension oder Emulsion enthaltend zumindest eine Verbindung der Formel (I) gegebenenfalls vermischt mit Hilfsstoffen wie beispielsweise Schutzkolloiden vorzulegen, dann den pH-Wert einzustellen, dann zu erhitzen und dann das Melamin-Formaldehyd Polymer zuzugeben. Bevorzugt werden die gemäß des erfindungsgemäßen Verfahrens hergestellten erfindungsgemäßen Mikrokapseln dann unter Rühren bei erhöhter Temperatur behandelt.

Das erfindungsgemäße Verfahren zur Herstellung der erfindungsgemäßen Mikrokapseln kann bei beliebigen Drücken durchgeführt werden. Bevorzugt wird das erfindungsgemäße Verfahren zur Herstellung der erfindungsgemäßen Mikrokapseln bei Umgebungsdruck durchgeführt.

Die erfindungsgemäßen Mikrokapseln lassen sich anschließend beispielsweise durch Filtration isolieren und bei Raumtemperatur oder durch leichtes Erwärmen trocknen. Es besteht aber auch die Möglichkeit das Mikroverkapselungsmaterial durch Sprühtrocknung oder Gefriertrocknung zu trocknen und zu isolieren. Bevorzugt werden die erfindungsgemäßen Mikrokapseln durch Filtration abgetrennt und dann getrocknet.

Offenbart sind Mikrokapseln erhalten nach dem erfindungsgemäßen Verfahrenmit einer 24h-Leachingrate von 0,1 bis 9,0 parts per million (ppm), bevorzugt von 0,1 bis 5,0 ppm, besonders bevorzugt von 0,1 bis 3,0 ppm und ganz besonders bevorzugt weniger als 2,5 ppm, bestimmt mittels 24h-Leaching-Test wie in den Beispielen angegeben.

Die Erfindung betrifft weiterhin Mikrokapseln gemäß vorstehender Definition, die alternativ oder zusätzlich eine 96h-Leachingrate von 0,1 bis 9,0 parts per million (ppm), bevorzugt von 0,1 bis 6,0 ppm, besonders bevorzugt von 0,1 bis 5,0 ppm und ganz besonders bevorzugt weniger als 2,5 ppm, bestimmt mittels 96h-Leaching-Test wie in den Beispielen angegeben, aufweisen.

Die erfindungsgemäßen Mikrokapseln eignen sich insbesondere für den Einsatz in oder als biozide, insbesondere algizide, Mittel. Daher sind von der Erfindung auch biozide Mittel enthaltend erfindungsgemäße Mikrokapseln umfasst sowie die Verwendung der erfindungsgemäßen Mikrokapseln als biozides Mittel oder in bioziden Mitteln.

Die erfindungsgemäßen Mikrokapseln zeichnen sich durch hohe Wirksamkeit und ihr breites Wirkungsspektrum gegen Algen, Cyanobakterien und andere photoautotrophe Mikroorganismen aus.

Bei Algen handelt es sich vorzugsweise um prokaryotische Algen (Cyanophyta, Blaualgen) wie beispielsweise Vertreter aus der Unterklasse Coccogoneae und der Unterklasse Hormogoneae.

Beispielhaft seien aus der Ordnung Chroococcales Arten der Gattungen Synechococcus, Chroococcus, Gloeocapsa, Aphanocapsa, Aphanothece, Microcystis und Merismopedia; aus den Ordnungen Chamaesiphonales und Pleurocapsales Arten der Gattungen Chamaesiphon und Dermatocarpa; aus der Ordnung Oscillatoriales Arten der Gattungen Phormidium, Schizothrix, Spirulina, Plectonema und Lyngbya; aus der Ordnung Nostocales Arten der Gattungen Nostoc, Rivularia, Tolypothrix, Scytonema, Anabaenopsis, Calothrix und Aulosira; aus der Ordnung Stigonematatles Arten der Gattungen Stigonema, Fischerella, Hapalosiphon und Mastigocladus genannt.

Ferner zeigen die Verbindungen auch eine gute Wirksamkeit gegen eukaryotische Vertreter aus den Abteilungen Heterokontophyta, Rhodophyta, Chlorophyta, Euglenophyta, Cryptophyta, Dinophyta und Haptophyta.

Beispielhaft seien aus der Klasse Xanthophyceae Arten der Gattungen Tribonema und Vaucheria; aus der Klasse Chrysophyceae Arten der Gattungen Chrysocapsa, Rhizochrysis, Chrysosphaera, Phaeothamnion und Thallochrysis; aus der Klasse Phaeophyceae (Braunalgen) Arten der Gattungen Ectocarpus, Pylaiella, Cutleria, Zanardinia, Dictyota, Padina, Dictyopteris, Laminaria, Macrocystis, Lessonia, Nerocystis, Chorda, Alaria, Fucus, Ascophyllum, Himanthalia, Sargassum, Cystoseira, Halidrys, Pelvetia, Coccophora und Durvilla; aus der Klasse Rhodophyceae (Rotalgen) Arten der Gattungen Porphyridum, Bangia, Porphyra, Corallina, Lithothamnia, Lithophyllum, Rhodymania, Delesseria, Grinnellia, Platysiphonia, Polysiphonia, Ceramium, Plumaria, aus der Klasse Chlorophyceae (Grünalgen) Arten der Gattungen Chlorococcum, Chlorella, Spongiochloris, Monostroma, Ulva, Enteromorpha, Ulothrix, Trentepohlia, Apatococcus, Desmococcus, Cladophora, Siphonocladus, Valonia, Caulerpa, Bryopsis, Acetabularia, Halimeda und Tuna sowie auch Chlamydomonas, Microspora, Platymonas, Pleurococcus, Scenedesmus, Stichococcus, Trentepophila, Anacystis, Gleocapsa, Mycrocystis, Oscillatoria, Scytonema genannt.

Die erfindungsgemäßen bioziden Mittel können in beliebiger Formulierung vorliegen wie beispielsweise in Form von Suspensionskonzentraten, wasserdispergierbaren Pulvern, wasserdispergierbaren Granulaten oder einfachen Pulvermischungen, wobei Suspensionskonzentrate, Pulvermischungen und wasserdispergierbare Granulate bevorzugt sind.

Grundsätzlich sind bevorzugte Formulierungsarten im Wesentlichen abhängig vom Einsatzzweck und den dafür geforderten physikalischen Eigenschaften. Da diese jedoch bekannt sind, ist es für den Fachmann gängige Praxis, in wenigen Versuchen eine bevorzugte Formulierungsart zu ermitteln.

Die Formulierungen können zusätzlich auch noch weitere Stoffe, wie Stabilisatoren, Gebindekonservierungsmittel und weitere Biozide, wie beispielsweise Fungizide, Algizide, Insektizide, Akarizide, Nematizide, Radizide und Herbizide oder Mischungen davon, bevorzugt Fungizide oder Algizide oder Mischungen davon, ganz bevorzugt Algizide enthalten.

Die bioziden Mittel können neben den erfindungsgemäßen Mikrokapseln gegebenenfalls weiterhin verschiedene Hilfsstoffe enthalten. Für die nachstehend genannten Hilfsstoffe besteht jeweils unabhängig voneinander auch die Möglichkeit, dass sie nicht enthalten sind. Mögliche Hilfsstoffe sind beispielsweise:
- Grenzflächenaktive Stoffe, wie beispielsweise Tenside. Tenside können beispielsweise nichtionische, kationische und amphotere Tenside, vorzugsweise anionische Tenside sein. Anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, zum Beispiel Natrium-, Kalium-, Magnesium-, Calcium-, sowie Ammonium- und Triethanolamin-Salze. Die Alkylethersulfate, Alkyletherphosphate und Alkylethercarboxylate können jeweils beispielsweise von 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat. Die erfindungsgemäßen bioziden Mittel können dabei beispielsweise von 0,01 bis 10 Gew.-%, vorzugsweise von 0,2 bis 8 Gew.-%, besonders bevorzugt von 0,3 bis 5 Gew.-% und ganz besonders bevorzugt von 0,5 bis 3 Gew.-% an grenzflächenaktiven Stoffen enthalten.

- Entschäumer. Als Entschäumer werden im Allgemeinen grenzflächenaktive Stoffe eingesetzt, die in der tensidischen Lösung nur schwach löslich sind. Bevorzugte Entschäumer sind solche, die sich von natürlichen Fetten und Ölen, Petroleum-Derivaten oder Siliconölen ableiten.
- Benetzungsmittel, wie beispielsweise Alkali-, Erdalkali-, Ammoniumsalze von aromatischen Sulfonsäuren, zum Beispiel Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol-oder Tributylphenylpolyglycolether, Tris-sterylphenyletherethoxylate, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose. Die erfindungsgemäßen bioziden Mittel können dabei beispielsweise von 0,01 bis 8 Gew.-%, vorzugsweise von 0,2 bis 6 Gew.-%, besonders bevorzugt von 0,3 bis 5 Gew.-% und ganz besonders bevorzugt von 0,5 bis 3 Gew.-% an Benetzungsmitteln enthalten.
- Emulgatoren, wie beispielsweise Natrium-, Kalium-und Ammoniumsalze von gradkettigen aliphatischen Carbonsäuren der Kettenlänge C₁₀-C₂₀, Natriumhydroxyoctadecansulfonat, Natrium-, Kalium-und Ammoniumsalze von Hydroxyfettsäuren der Kettenlänge C₁₀-C₂₀ und deren Sulfierungs- bzw. Acetylierungsprodukte, Alkylsulfate, auch als Triethanolaminsalze, Alkyl-(C₁₀-C₂₀)-sulfonate, Alkyl-(C₁₀-C₂₀)-arylsulfonate, Dimethyldialkyl-(C₈-C₁₈)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-Ester mit Polyethylenglykolethern von einwertigen aliphatischen Alkoholen der Kettenlänge C₁₀-C₁₂ (Di-Natriumsalz), Sulfobernsteinsäure-4-Ester mit Polyethylenglykolnonylphenylether (Di-Natriumsalz), Sulfobernsteinsäure biscyclohexylester (Natriumsalz), Ligninsulfonsäure sowie deren Calcium-, Magnesium-, Natrium- und Ammoniumsalze, Polyoxyethylen-sorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol. Die erfindungsgemäßen bioziden Mittel können dabei beispielsweise von 0,01 bis 15 Gew.-%, vorzugsweise von 0,02 bis 8 Gew.-%, besonders bevorzugt von 0,05 bis 6 Gew.-% und ganz besonders bevorzugt von 0,1 bis 5 Gew.-% an Emulgatoren enthalten.
- Dispergiermittel, wie beispielsweise Alkylphenolpolyglycolether. Die erfindungsgemäßen bioziden Mittel können dabei beispielsweise von 0,01 bis 15 Gew.-%, vorzugsweise von 0,02 bis 8 Gew.-%, besonders bevorzugt von 0,05 bis 6 Gew.-% und ganz besonders bevorzugt von 0,1 bis 5 Gew.-% an Dispergiermitteln enthalten.
- Stabilisatoren, wie beispielsweise Cellulose und Cellulosederivate. Die erfindungsgemäßen bioziden Mittel können dabei beispielsweise von 0,01 bis 6 Gew.-%, vorzugsweise von 0,01 bis 3 Gew.-%, besonders bevorzugt von 0,01 bis 2 Gew.-% und ganz besonders bevorzugt von 0,01 bis 1 Gew.-% an Stabilisatoren enthalten.
- Stabilisatoren, wie beispielsweise Antioxidantien, Radikalfänger oder UV-Absorber.
- Haftmittel oder Schutzkolloide, wie beispielsweise Carboxymethylcellulose, natürliche und synthetische pulvrige, körnige oder latexförmige Polymere, wie Gummi Arabicum, Polyvinylalkohol, Polyvinylacetat, sowie natürliche Phospholipide, wie Kephaline und Lecithine und synthetische Phospholipid sowie Paraffinöle. Die erfindungsgemäßen bioziden Mittel können dabei beispielsweise von 0,01 bis 8 Gew.-%, vorzugsweise von 0,05 bis 4 Gew.-%, besonders bevorzugt von 0,2 bis 3 Gew.-% und ganz besonders bevorzugt von 0,2 bis 2 Gew.-% an Haftmitteln enthalten.
- Spreitmittel, wie beispielsweise Isopropylmyristat Polyoxyethylennonylphenylether und Polyoxyethylenlaurylphenylether. Die erfindungsgemäßen bioziden Mittel können dabei beispielsweise von 0,01 bis 20 Gew.-%, vorzugsweise von 0,1 bis 10 Gew.-%, besonders bevorzugt von 0,1 bis 5 Gew.-% und ganz besonders bevorzugt von 0,1 bis 2 Gew.-% an Spreitmitteln enthalten.
- Duftstoffe und Farbstoffe, wie beispielsweise anorganische Pigmente, zum Beispiel Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink. Die erfindungsgemäßen bioziden Mittel können dabei beispielsweise jeweils von 0,001 bis 4 Gew.-%, vorzugsweise von 0,01 bis 1 Gew.-%, besonders bevorzugt von 0,01 bis 0,8 Gew.-% an Duftstoffen und Farbstoffen enthalten.
- Puffersubstanzen, Puffersysteme oder pH-Wert-Regulatoren. Die erfindungsgemäßen bioziden Mittel können dabei beispielsweise jeweils von 0,01 bis 10 Gew.-%, vorzugsweise von 0,1 bis 5 Gew.-% an Puffersubstanzen, Puffersystemen oder pH-Wert-Regulatoren enthalten.
- Verdickungsmittel, wie beispielweise Polysaccharide, Xanthan Gum, Natrium- oder Magnesium Silicate, Heteropolysaccharide, Alginate, Carboxymethylcellulose, Gummi Arabicum oder Polyacrylsäuren, bevorzugt Xanthan Gum.
   - Entstaubungsmittel sind beispielsweise Polyglykole und Polyglykolether. Die erfindungsgemäßen bioziden Mittel können dabei beispielsweise jeweils von 0,01 bis 2 Gew.-%, vorzugsweise von 0,05 bis 1 Gew.-%, besonders bevorzugt von 0,1 bis 0,5 Gew.-% an Entstaubungsmitteln enthalten.
   - Als Fließmittel oder Trennmittel können beispielsweise hochdisperse Kieselsäure oder Mg-Salze von Fettsäuren eingesetzt werden. Die erfindungsgemäßen bioziden Mittel können dabei zur Verbesserung der Fließfähigkeit der Feststoffe jeweils von 0,01 bis 5 Gew.-%, vorzugsweise von 0,05 bis 3 Gew.-%, besonders bevorzugt von 0,1 bis 2 Gew.-% an Fließmittel enthalten.
   - Gebindekonservierungsmittel sind beispielsweise Biozide, Bakterizide und Fungizide. Die erfindungsgemäßen bioziden Mittel können dabei beispielsweise jeweils von 0,01 bis 2 Gew.-%, vorzugsweise von 0,05 bis 1 Gew.-% an Gebindekonservierungsmittel enthalten.

Der Gesamtgehalt der oben genannten Hilfsmittel in den bioziden Mitteln beträgt beispielsweise von 0,001 bis 20 Gew.-%, bevorzugt von 0,1 bis 15 Gew.-% und besonders bevorzugt von 0,1 bis 10 Gew.-%.

Feste Formulierungen, wie beispielsweise Pulvermischungen oder wasserdispergierbare Granulate (WG) können neben den partikulären Verbindungen der Formel (I) auch noch feste Hilfsmittel wie zum Beispiel natürliche Gesteinsmehle, wie Kaoline, Tonerden, Talkum, Marmor, Kreide, Quarz, Attapulgit, Montmorillonit oder Diatomeenerde oder synthetische anorganische Stoffe, wie hochdisperse Kieselsäure, Aluminiumoxid und Silikate enthalten oder Mischungen davon.

Die festen Formulierungen können sich in an sich bekannter Weise beispielsweise durch innige Vermischung der erfindungsgemäßen Mikrokapseln mit den festen Hilfsmitteln oder durch gemeinsame Zerkleinerung von festen Hilfsmitteln mit den Verbindungen der Formel (I) erhalten werden. Weiterhin können die festen Formulierungen durch Trocknung, beispielsweise Sprühtrocknung, einer flüssigen Formulierung erhalten werden.

Bevorzugte feste Formulierungen enthalten beispielsweise von 10 bis 100 Gew.-% der erfindungsgemäßen Mikrokapseln, vorzugsweise von 15 bis 98 Gew.-%.

Flüssige Formulierungen können beispielsweise Suspensionskonzentrate, Dispersionen, Gele oder Pasten sein.

Bevorzugte flüssige Formulierungen sind bevorzugt wässrige Dispersionen.

Die flüssigen Formulierungen wie insbesondere die Dispersionen lassen sich in an sich bekannter Weise beispielsweise dadurch herstellen, indem man die Verbindungen der Formel (I) und die weiteren Stoffe, die in der flüssigen Formulierung enthalten sein sollen, gemeinsam zerkleinert oder die partikulären, Verbindungen der Formel (I) und die weiteren Stoffe, die in der flüssigen Formulierung enthalten sein sollen, mittels eines Dissolvers oder Rührers innig miteinander vermischt.

Die flüssigen Formulierungen enthalten im Allgemeinen von 2 bis 95 Gew.-%, vorzugsweise von 5 bis 75 Gew.-% und ganz besonders bevorzugt von 5 bis 50 Gew.-% der erfindungsgemäßen Mikrokapseln.

Die Erfindung betrifft weiterhin die Verwendung der erfindungsgemäßen Mikrokapseln oder der erfindungsgemäßen bioziden Mittel zum Schutz von technischen Materialien, sowie technische Materialien enthaltend die erfindungsgemäßen bioziden Mittel oder erfindungsgemäßen Mikrokapseln.

Technische Materialien sind beispielsweise Baumaterialien, Holz, Holzwerkstoffe, Holz-Plastik-Verbundstoffe, Dichtungsmassen, Fugendichtungen, Kunststoffe, Folien, Steinplatten, Textilien wie zum Beispiel Planen und Zelte, Textilverbundstoffe, Beschichtungsmassen wie zum Beispiel Farben, Wandfarben, Fassadenfarben, Außenfarben, Innenfarben, Dispersionsfarben, Silicatfarben, Lacke, Beton, Zement, Mörtel oder Putze, vorzugsweise silicatgebundene, mineralische, harzgebundene oder siliconharzgebundene Putze, Kunstharzputzen, Holzbeschichtungen, Holzlasuren, Betonbeschichtungen, Dachsteinbeschichtungen, Dichtungsmassen oder Textilbeschichtungen.

Weitere Anwendungen für erfindungsgemäße Beschichtungsmassen finden sich neben der Bauindustrie auch in Medizintechnik, Textilindustrie, Gummiindustrie, Dichtungsindustrie, Agrarindustrie und Labortechnik.

Der Vorteil der Erfindung ist darin zu sehen, dass die erfindungsgemäßen Mikrokapseln ein überlegenes, weil vermindertes Leachingverhalten zeigen. Es lassen sich so erfindungsgemäß sowohl geringere Stoffmengen zum Schutz von Beschichtungsmassen einsetzen, als auch erheblich längere Wirkdauern erzielen.

Die folgenden Beispiele erläutern die vorliegenden Erfindung.

### Beispiele

Zur Herstellung der in den folgenden Beispielen verwendeten Diuron enthaltenden Mikrokapseln, wurden nachfolgende Substanzen eingesetzt:

| **Bezeichnung** | **Menge** |
|---|---|
| Gummi Arabicum-Lösung (4 Gew.-%) | 33,75 g |
| Coadis™ BR3 (50 Gew.-% in H₂O) (Dispersionsreagenz; wässrige Polyacrylatsalz-Lösung der Firma Coatex) | 6,75 g |
| Wasser | 451,5 g |
| SILOFOAM®SRE (Silikon-Antischaumemulsion Entschäumer der Firma Wacker) | 2,7 g |
| Diuron | 135 g |
| Maprenal®-Wasser-Lösung (1:1) (Maprenal® MF 921w/85WA Melamin-Formaldehyd Bindemittel der Firma INEOS Melamines) | 135 g |
| Soprophor® S25 (Emulgator auf Basis von Trissterylphenyletherethoxylaten) | 2,26 g |
| Preventol® D7 (Gebindekonservierungsmittel mit etwa 1,5 Gew.-% Chlormethylisothiazolinon/Methylisothiazolinon 3:1) | 0,75 g |
| Preventol® BIT 20D (Gebindekonservierungsmittel mit etwa 20 Gew.-% Benzisothiazolinon) | 0,72 g |
| Rhodopol-G® (Verdicker auf Basis von Xanthan Gum der Firma Solvay Rhodia) | 1,20 g |
| Harnstoff | 37,65 g |

### Durchführung Leaching-Test für Diuron enthaltende Mikrokapseln:

In einem 100 ml Schraubdeckelglas wurde eine Menge der Formulierung eingewogen, die 280 ppm Diuron (bezogen auf 100 g) enthält, und mit Wasser auf 100 g aufgefüllt. Das Schraubdeckelglas wurde verschlossen und die Probe wurde auf einem Kreisschüttler bei 250 Umdrehungen pro Minute und 20°C geschüttelt. Nach 24 Stunden (24h-Leaching-Test) und 96 Stunden (96h-Leaching-Test) wurde 1 ml Probe mit einer Pipette entnommen und in ein Reaktionsgefäß überführt. Die Probe wurde 6 Minuten bei 14.000 Umdrehungen pro Minute zentrifugiert und der Überstand mittels High-Performance-Liquid-Chromatography analysiert.

### Herstellung der Diuron-Suspension:

Die Herstellung der Diuronsuspension für die Beispiele 1 bis 6 erfolgt folgendermaßen:
Suspensionserzeugung: In einem 1000 ml Edelstahlbecher wurden bei einer Raumtemperatur die oben angegebenen Mengen Gummi Arabicum-Lösung, Coadis® BR3-Lösung und Wasser zusammen mit Entschäumer Silfoam®SRE vorgelegt. Durch Zugabe von Zitronensäure-Lösung (50 Gew.-%) wurde der pH-Wert auf 2,99 gestellt. Anschließend wurde Diuron unter Rührung zugegeben und für 30 Minuten mit einem Rührstab (Ultra-Turrax) durchmischt. Der Rohansatz wurde in einen 1000 ml-Planschlifftopf überführt und auf die Abscheidungstemperatur von 60°C erhitzt.

### Größenbestimmung:

Die Bestimmung der Mikrokapselgröße wurde mittels Laserbeugung. Dazu wurden folgende Geräte und Einstellungen verwendet:

| | |
|---|---|
| **Gerät:** | LS 13 320 Particle Size Analyzer der Firma Beckmann Coulter mit PIDS-Technologie (Polarization Intensity Differential Scattering-Technologie) |
| **Sample Modul:** | Universal Liquid Module (ULM) |
| **Illuminating Source:** | Diffraction: Solid State (780 nm); PIDS: Wolfram Lampe mit Bandpassfilter (450, 600 und 900 nm) |
| **Messzeit:** | 90 Sekunden |
| **Berechnung:** | Fraunhofer-Modell |
| **Ergebnis:** | Durchmesser D90% der Volumenverteilung |

### Beispiele 1-4:

### Herstellung von Diuron enthaltende Mikrokapseln mit Harnstoffzugabe während der Formulierung

Abscheidung: Bei der Abscheidungstemperatur von 60°C wurde eine Maprenal®-Wasser-Lösung (1:1) über einen Zeitraum von 2 Stunden zur Diuron-Suspension zugetropft.

Behandlung: Nach beendeter Zugabe wurde die Mischung auf die jeweilige Behandlungstemperatur erhitzt und 4 Stunden gerührt.
- **Beispiel 1:** Behandlungstemperatur 70°C
- **Beispiel 2:** Behandlungstemperatur 80°C
- **Beispiel 3:** Behandlungstemperatur 85°C

Danach wurde der Ansatz auf Raumtemperatur abgekühlt und für 12 Stunden weiter gerührt. Der pH-Wert wurde anschließend durch Zugabe von Natriumhydroxid-Lösung (50 Gew.-%) auf pH 8 eingestellt.

Formulierung: Danach wurden die vorne angegebenen Mengen Soprophor® S25, Preventol® D7, Preventol® BIT 20D, Rhodopol-G® und Harnstoff zugegeben.

**Tabelle 1: Freisetzung von Diuron (in ppm) aus Mikrokapseln (hergestellt aus einer Formulierung enthaltend 280 ppm Diuron und Harnstoff und Behandlung bei verschiedenen Temperaturen (Temp.) gemäß den Beispielen 1 bis 3) direkt nach Herstellung nach 24 Stunden und 96 Stunden Leaching.**

| | **24h-Leaching-Test** | | | | | | **96h-Leaching-Test** | | | | | |
|---|---|---|---|---|---|---|---|---|---|---|---|---|
| **Lagerungs-temperatur** | **RT** | | | **54°C** | | | **RT** | | | **54°C** | | |
| **Temp. [°C]** | **70** | **80** | **85** | **70** | **80** | **85** | **70** | **80** | **85** | **70** | **80** | **85** |
| **Direkte Messung** | 6,9 | 1,9 | 1,5 | 6,9 | 1,9 | 1,8 | 19,3 | 4,7 | 3,8* | 19,3 | 4,7 | 3,8* |
| **2 Wochen** | | | | 3,6 | 2,9 | 2,9 | | | | 8,6 | 5,3 | 4,8 |
| **1 Monat** | 7,5 | 2,3 | 2,1 | 4,1 | 2,8 | 3,8 | 23,8 | 4,6 | 3,7 | 9,6 | 5,3 | 4,7 |

| | | | | | | | | | | | | |
|---|---|---|---|---|---|---|---|---|---|---|---|---|
| *Leaching nach 72 h | | | | | | | | | | | | |

Partikelgrößen nach Herstellung gemäß Beispiel 2: D90=29.75 mm
Partikelgrößen nach Herstellung gemäß Beispiel 3: D90=29.46 mm
**Beispiel 4:** Beispiel 4 unterscheidet sich von Beispiel 3 lediglich dadurch, dass
- die Maprenal®-Wasser-Lösung (1:1) über einen Zeitraum von 3 statt 2 Stunden zur Diuron-Suspension zugegeben wurde.
- das Erhitzen bei 85°C Behandlungstemperatur für 20 statt 4 Stunden erfolgt ist und
- der Ansatz nach Abkühlen auf Raumtemperatur für 2 statt 12 Stunden weiter gerührt wurde.

| | **24h-Leaching-Test** | **96h-Leaching-Test** | **192h-Leaching-Test** |
|---|---|---|---|
| **Lagerungs-temperatur** | **RT** | **RT** | **RT** |
| **Temp. [°C]** | **85** | **85** | **85** |
| **Direkte Messung** | 0,7 | 1,0 | 1,9 |

### Beispiel 5 (nicht erfindungsgemäß)

### Herstellung von Diuron enthaltenden Mikrokapseln mit Harnstoffzugabe direkt vor der Behandlung

Beispiel 5 unterscheidet sich von Beispiel 2 ausschließlich durch einen unterschiedlichen Zugabezeitpunkt des Harnstoffs.

Abscheidung: Bei der Abscheidungstemperatur von 60°C wurde eine Maprenal®-Wasser-Lösung (1:1) über einen Zeitraum von 2 Stunden zur Diuron-Suspension zugetropft. Anschließend wird Harnstoff zugegeben.

Behandlung: Nach beendeter Zugabe wurde die Mischung auf 80°C erhitzt und 4 Stunden gerührt. Danach wurde der Ansatz auf Raumtemperatur abgekühlt und für 12 Stunden weiter gerührt. Der pH-Wert wurde anschließend durch Zugabe von Natriumhydroxid-Lösung (50 Gew.-%) auf pH 8 eingestellt.

Formulierung: Danach wurden die vorne angegebenen Mengen Soprophor® S25, Preventol® D7, Preventol® BIT 20D, Rhodopol-G® zugegeben.

**Tabelle 2:**

| Freisetzung von Diuron aus Mikrokapseln (hergestellt aus einer Formulierung enthaltend 280 ppm Diuron und Harnstoff gemäß Beispiel 5) nach 24 Stunden Leaching. | | |
|---|---|---|
| **Lagerung** | **Lagerungstemperatur [°C]** | **Diuron [ppm]** |
| Direkte Messung | 21 | 24,8 |

### Beispiel 6

### Herstellung von Diuron enthaltenden Mikrokapseln mit Harnstoffzugabe direkt nach der Behandlung

Beispiel 6 unterscheidet sich von Beispiel 2 ausschließlich durch einen unterschiedlichen Zugabezeitpunkt des Harnstoffs.

Abscheidung: Bei der Abscheidungstemperatur von 60°C wurde eine Maprenal®-Wasser-Lösung (1:1) über einen Zeitraum von 2 Stunden zur Diuron-Suspension zugetropft.

Behandlung: Nach beendeter Zugabe wurde die Mischung wird auf 80°C erhitzt und 4 Stunden bei 80°C gerührt. Anschließend wurde Harnstoff zugegeben. Danach wurde der Ansatz auf Raumtemperatur abgekühlt und für 12 Stunden weiter gerührt. Der pH-Wert wurde anschließend durch Zugabe von Natriumhydroxid-Lösung (50 Gew.-%) auf pH 8 eingestellt.

Formulierung: Danach wurden die oben angegebenen Mengen Soprophor® S25, Preventol® D7, Preventol® BIT 20D, und Rhodopol-G® zugegeben.

**Tabelle 3:**

| Freisetzung von Diuron aus Mikrokapseln (hergestellt aus einer Formulierung enthaltend 280 ppm Diuron und Harnstoff gemäß Beispiel 6) nach 24 Stunden Leaching. | | |
|---|---|---|
| **Lagerung** | **Lagerungstemperatur [°C]** | **Diuron [ppm]** |
| Direkte Messung | 21 | 18 |

### Beispiel 7: Einfluss der Behandlungsdauer

Abscheidung: Bei der Abscheidungstemperatur von 60°C wurde eine Maprenal®-Wasser-Lösung (1:1) über einen Zeitraum von 2 Stunden zur Diuron-Suspension zugetropft.

Behandlung: Nach beendeter Zugabe wurde die Mischung auf die jeweilige Behandlungstemperatur erhitzt und für die jeweilige Behandlungsdauer gerührt. Der Ansatz wurde auf Raumtemperatur abgekühlt und 12 Stunden weiter gerührt. Der pH-Wert wurde anschließend durch Zugabe von Natriumhydroxid (50 Gew.-%) auf pH 8 eingestellt.

Formulierung: Danach wurden die oben angegebenen Mengen Soprophor® S25, Preventol® D7, Preventol® BIT 20D, Rhodopol-G® und Harnstoff zugegeben.

**Tabelle 4:**

| Freisetzung von Diuron aus Mikrokapseln (hergestellt aus einer Formulierung enthaltend 280 ppm Diuron und Harnstoff (Beispiel 7)) nach 24 Stunden Leaching. | | |
|---|---|---|
| **Behadlungsdauer [Stunden]** | **Behandlungstemperatur [°C]** | **Diuron [ppm]** |
| 1 | 85 | 3,6 |
| 2 | 85 | 3,9 |
| 3 | 85 | 2,5 |
| 4 | 85 | 1,5 |

### Durchführung der Algentoxizitätsmessungen

Die Algentoxizitätsmessungen wurden gemäß OECD Guideline 201 (23.März 2006) durchgeführt.

### Einfluss der Behandlungstemperatur auf die Algentoxizitätsmessung

| | | |
|---|---|---|
| **Behandlungstemperatur [°C]** | 70 | 80 |
| **Harnstoff** | + | |
| **EC50 [mg/l]** | 0,91 | 2,653 |

### Einfluss des Harnstoff auf die Algentoxizitätsmessung

| | | |
|---|---|---|
| **Behandlungstemperatur [°C]** | 70 | |
| **Harnstoff** | + | - |
| **EC50 [mg/l]** | 0,91 | 3,384 |

Unter dem EC50-Wert versteht man die halbmaximale effektive Konzentration der Formulierung. Die Konzentrationsangabe bezieht sich auf die Menge an Formulierung pro Liter.

## Patentansprüche

1. Verfahren zur Herstellung von Mikrokapseln, wobei die Mikrokapseln enthalten zumindest eine Verbindung der Formel (I) 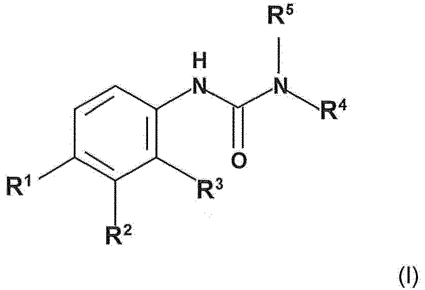 wobei
R¹ und R² unabhängig voneinander Wasserstoff, Chlor, Brom, verzweigtes oder geradkettiges, acyclisches (C₁-C₁₀)-Alkyl, besonders bevorzugt (C₁-C₄)-Alkyl, verzweigtes oder geradkettiges, acyclisches (C₁-C₁₀)-Alkoxy, besonders bevorzugt (C₁-C₄)-Alkoxy, Trifluormethyl oder Aryloxy,
R³ Wasserstoff, Chlor, Brom, Fluor oder verzweigtes oder geradkettiges, acyclisches (C₁-C₁₀)-Alkyl, besonders bevorzugt (C₁-C₄)-Alkyl und
R⁴ und R⁵ unabhängig voneinander verzweigtes oder geradkettiges, acyclisches (C₁-C₁₀)-Alkyl, besonders bevorzugt (C₁-C₄)-Alkyl oder verzweigtes oder geradkettiges, acyclisches (C₁-C₁₀)-Alkoxy, besonders bevorzugt (C₁-C₄)-Alkoxy bedeuten,
wobei die Verbindung der Formel (I) mit zumindest einem Melamin-Formaldehyd Polymer mikroverkapselt ist, wobei das Verfahren
zumindest folgende Schritte umfasst:
a) Abscheidung von Mikroverkapselungsmaterial enthaltend Melamin-Formaldehyd Polymer auf zumindest einer Verbindung der Formel (I) und danach
b) Behandlung der Mikrokapseln bei einer Temperatur von 70 bis 95°C über einen Zeitraum von 3 bis 24 Stunden und
c) nach der thermischen Behandlung der Mikrokapseln Harnstoff zugegeben wird.

2. Verfahren nach Anspruch 1, **dadurch gekennzeichnet, dass** eine Suspension oder Emulsion enthaltend zumindest eine Verbindung der Formel (I) und des Melamin-Formaldehyd Polymers vorgelegt wird, dann auf die Abscheidungstemperatur erhitzt wird, dann das Mikroverkapselungsmaterial abgeschieden wird und dann bei einer Temperatur von 70 bis 95°C behandelt wird.

3. Mikrokapseln, erhalten durch ein Verfahren gemäß einem der Ansprüche 1 bis 2.

4. Mikrokapseln nach Anspruch 3 **dadurch gekennzeichnet, dass**
Aryloxy entweder für Phenoxy, oder durch verzweigtes oder geradkettiges, acyclisches (C₁-C₁₀)-Alkoxy, besonders bevorzugt (C₁-C₄)-Alkoxyinsbesondere durch Methoxy substituiertes Phenoxy steht.

5. Mikrokapseln nach Anspruch 3 oder 4, **dadurch gekennzeichnet, dass** besonders bevorzugte Verbindungen der Formel (I) 3-(4-Brom-3-chlorphenyl)-1-methoxy-1-methylharnstoff (Chlorbromuron), 3-(3-Chlor-4-methylphenyl)-1,1-dimethylharnstoff (Chlortoluron), 3-(3,4-Dichlorphenyl)-1,1-dimethylharnstoff (Diuron), 3-(4-(4-Methoxyphenoxy)phenyl)-1,1-dimethylharnstoff (Difenoxuron), 1,1-Dimethyl-3-[3-(trifluormethyl)phenyl]harnstoff (Fluometuron), 3-(4-Isopropylphenyl)-1,1-dimethylharnstoff (Isoproturon) und 1-Butyl-3-(3,4-dichlorophenyl)-1-methylharnstoff (Neburon) sind, und ganz besonders bevorzugt Diuron ist.

6. Mikrokapseln nach einem der Ansprüche 3 bis 5, **dadurch gekennzeichnet, dass** sie eine volumengemittelte Teilchengröße von 0,3 bis 100 µm und bevorzugt von 5 bis 40 µm aufweisen.

7. Mikrokapseln nach einem der Ansprüche 3 bis 6, **dadurch gekennzeichnet, dass** das Mikroverkapselungsmaterial andere synthetische, halbsynthetische oder natürliche Aminoplast-Harze, bevorzugt mit Harnstoff beziehungsweise Phenol modifizierte Melamin-Formaldehyd-Harze, Aminoplast-Harze aus einer NH-Gruppen enthaltenden Verbindung und Acetaldehyd oder Glyoxal, Urethanharze, Cyanamidharze beziehungsweise Dicyanamidharze, Anilinharze, Sulfonamidharze oder Mischungen dieser Harze enthält.

8. Biozide Mittel enthaltend Mikrokapseln nach einem der Ansprüche 3 bis 7.

9. Nicht-therapeutische Verwendung der Mikrokapseln nach einem der Ansprüche 3 bis 7 als biozides Mittel oder in bioziden Mitteln.

10. Technische Materialien enthaltend die biozide Mittel nach Anspruch 8 oder Mikrokapseln nach einem der Ansprüche 3 bis 7.

11. Verwendung von Mikrokapseln nach einem der Ansprüche 3 bis 7 oder der bioziden Mittel nach Anspruch 8 zum Schutz von technischen Materialien.

## Claims

1. Method for producing microcapsules, wherein the microcapsules contain at least one compound of the formula (I) 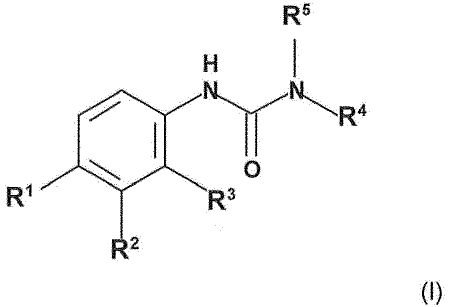 wherein
R¹ and R² are each independently hydrogen, chlorine, bromine, branched or straight-chain acyclic (C₁-C₁₀) alkyl, particularly preferably (C₁-C₄)alkyl, branched or straight-chain acyclic (C₁-C₁₀)alkoxy, particularly preferably (C₁-C₄)alkoxy, trifluoromethyl or aryloxy,
R³ is hydrogen, chlorine, bromine, fluorine or branched or straight-chain acyclic (C₁-C₁₀)alkyl, particularly preferably (C₁-C₄)alkyl, and
R⁴ and R⁵ are each independently branched or straight-chain acyclic (C₁-C₁₀)alkyl, particularly preferably (C₁-C₄)alkyl, or branched or straight-chain acyclic (C₁-C₁₀) alkoxy, particularly preferably (C₁-C₄)alkoxy,
wherein the compound of the formula (I) has been microencapsulated with at least one melamine-formaldehyde polymer, wherein the method comprises
at least the following steps:
a) depositing microencapsulation material containing melamine-formaldehyde polymer on at least one compound of the formula (I) and then
b) treating the microcapsules at a temperature of 70 to 95°C over a period of 3 to 24 hours and
c) after thermal treatment of the microcapsules, urea is added.

2. Method according to Claim 1, **characterized in that** a suspension or emulsion containing at least one compound of the formula (I) and the melamine-formaldehyde polymer is initially charged, then is heated to the deposition temperature, then the microencapsulation material is deposited and then treatment is performed at a temperature of 70 to 95°C.

3. Microcapsules obtained by a method according to either of Claims 1 and 2.

4. Microcapsules according to Claim 3, **characterized in that**
aryloxy is either phenoxy or phenoxy substituted by branched or straight-chain acyclic (C₁-C₁₀) alkoxy, particularly preferably (C₁-C₄) alkoxy, especially by methoxy.

5. Microcapsules according to Claim 3 or 4, **characterized in that** particularly preferred compounds of the formula (I) are 3-(4-bromo-3-chlorophenyl)-1-methoxy-1-methylurea (chlorbromuron), 3-(3-chloro-4-methylphenyl)-1,1-dimethylurea (chlortoluron), 3-(3,4-dichlorophenyl)-1,1-dimethylurea (diuron), 3-(4-(4-methoxyphenoxy)phenyl)-1,1-dimethylurea (difenoxuron), 1,1-dimethyl-3-[3-(trifluoromethyl)phenyl]urea (fluometuron), 3-(4-isopropylphenyl)-1,1-dimethylurea (isoproturon) and 1-butyl-3-(3,4-dichlorophenyl)-1-methylurea (neburon), and very particular preference is given to diuron.

6. Microcapsules according to any of Claims 3 to 5, **characterized in that** they have a volume-averaged particle size of 0.3 to 100 µm and preferably of 5 to 40 µm.

7. Microcapsules according to any of Claims 3 to 6, **characterized in that** the microencapsulation material contains other synthetic, semisynthetic or natural aminoplast resins, melamine-formaldehyde resins preferably modified with urea or phenol, aminoplast resins made from an NH-group-containing compound and acetaldehyde or glyoxal, urethane resins, cyanamide resins or dicyanamide resins, aniline resins, sulfonamide resins or mixtures of these resins.

8. Biocidal compositions containing microcapsules according to any of Claims 3 to 7.

9. Non-therapeutic use of the microcapsules according to any of Claims 3 to 7 as biocidal composition or in biocidal compositions.

10. Industrial materials containing the biocidal compositions according to Claim 8 or microcapsules according to any of Claims 3 to 7.

11. Use of microcapsules according to any of Claims 3 to 7 or of the biocidal compositions according to Claim 8 for the protection of industrial materials.

## Revendications

1. Procédé de fabrication de microcapsules, les microcapsules contenant :
au moins un composé de formule (I) 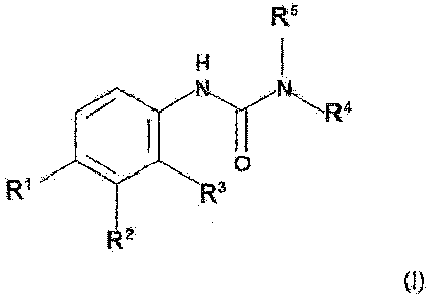 dans laquelle
R¹ et R² signifient indépendamment l'un de l'autre hydrogène, chlore, brome, alkyle en (C₁-C₁₀) acyclique, ramifié ou linéaire, de manière particulièrement préférée alkyle en (C₁-C₄), alcoxy en (C₁-C₁₀) acyclique, ramifié ou linéaire, de manière particulièrement préférée alcoxy en (C₁-C₄), trifluorométhyle ou aryloxy, R³ signifie hydrogène, chlore, brome, fluor ou alkyle en (C₁-C₁₀) acyclique, ramifié ou linéaire, de manière particulièrement préférée alkyle en (C₁-C₄), et
R⁴ et R⁵ signifient indépendamment l'un de l'autre alkyle en (C₁-C₁₀) acyclique, ramifié ou linéaire, de manière particulièrement préférée alkyle en (C₁-C₄), ou alcoxy en (C₁-C₁₀) acyclique, ramifié ou linéaire, de manière particulièrement préférée alcoxy en (C₁-C₄),
le composé de formule (I) étant microencapsulé avec au moins un polymère de mélamine-formaldéhyde, le procédé comprenant au moins les étapes suivantes :
a) le dépôt d'un matériau de microencapsulation contenant un polymère de mélamine-formaldéhyde sur au moins un composé de formule (I), puis
b) le traitement des microcapsules à une température de 70 à 95 °C pendant une durée de 3 à 24 heures, et
c) après le traitement thermique des microcapsules, l'ajout d'urée.

2. Procédé selon la revendication 1, **caractérisé en ce qu'**une suspension ou une émulsion contenant au moins un composé de formule (I) et le polymère de mélamine-formaldéhyde est chargée initialement, puis portée à la température de dépôt, puis le matériau de microencapsulation est déposé, puis le traitement à une température de 70 à 95 °C est effectué.

3. Microcapsules, obtenues par un procédé selon l'une quelconque des revendications 1 à 2.

4. Microcapsules selon la revendication 3, **caractérisées en ce que**
aryloxy représente phénoxy, ou phénoxy substitué par alcoxy en (C₁-C₁₀) acyclique, ramifié ou linéaire, de manière particulièrement préférée alcoxy en (C₁-C₄), notamment par méthoxy.

5. Microcapsules selon la revendication 3 ou 4, **caractérisées en ce que** des composés de formule (I) particulièrement préférés sont la 3-(4-bromo-3-chlorophényl)-1-méthoxy-1-méthylurée (chlorbromuron), la 3-(3-chloro-4-méthylphényl)-1,1-diméthylurée (chlortoluron), la 3-(3,4-dichlorophényl)-1,1-diméthylurée (diuron), la 3-(4-(4-méthoxyphénoxy)phényl)-1,1-diméthylurée (difénoxuron), la 1,1-diméthyl-3-[3-(trifluorométhyl)phényl]urée (fluométuron), la 3-(4-isopropylphényl)-1,1-diméthylurée (isoproturon) et la 1-butyl-3-(3,4-dichlorophényl)-1-méthylurée (néburon), et le diuron est tout particulièrement préféré.

6. Microcapsules selon l'une quelconque des revendications 3 à 5, **caractérisées en ce qu'**elles présentent une taille de particule moyennée en volume de 0,3 à 100 µm, et de préférence de 5 à 40 µm.

7. Microcapsules selon l'une quelconque des revendications 3 à 6, **caractérisées en ce que** le matériau de microencapsulation contient d'autres résines aminoplastes synthétiques, semi-synthétiques ou naturelles, de préférence des résines de mélamine-formaldéhyde modifiées avec de l'urée ou du phénol, des résines aminoplastes d'un composé contenant des groupes NH et d'acétaldéhyde ou de glyoxal, des résines d'uréthane, des résines de cyanamide ou des résines de dicyanamide, des résines d'aniline, des résines de sulfonamide, ou des mélanges de ces résines.

8. Agents biocides contenant des microcapsules selon l'une quelconque des revendications 3 à 7.

9. Utilisation non thérapeutique des microcapsules selon l'une quelconque des revendications 3 à 7 en tant qu'agent biocide ou dans des agents biocides.

10. Matériaux techniques contenant les agents biocides selon la revendication 8 ou des microcapsules selon l'une quelconque des revendications 3 à 7.

11. Utilisation de microcapsules selon l'une quelconque des revendications 3 à 7 ou des agents biocides selon la revendication 8 pour la protection de matériaux techniques.
